# EUROPEAN PATENT SPECIFICATION

(11) **EP 0 333 836 B1**
(45) Date of publication and mention of the grant of the patent: **24.05.1995**
(21) Application number: 88908886.0
(22) Date of filing: 12.08.1988
(51) Int. Cl.: B01D 53/34

(54) **PROCESS FOR NITROGEN OXIDES REDUCTION AND MINIMIZATION OF THE PRODUCTION OF OTHER POLLUTANTS**
VERFAHREN ZUR REDUKTION VON STICKOXIDEN UND MINIMIERUNG DER PRODUKTIVEN VON ANDEREN VERUNREINIGUNGEN
PROCEDE DE REDUCTION DES OXYDES D'AZOTE ET REDUCTION AU MINIMUM DE LA PRODUCTION D'AUTRES POLLUANTS

(30) Priority: 23.09.1987 US 100128; 14.10.1987 US 108779; 14.12.1987 US 132801; 29.02.1988 US 155864; 15.06.1988 US 207292; 15.06.1988 US 207382
(43) Date of publication of application: 27.09.1989
(73) Proprietor: FUEL TECH, INC., Stamford, CT 06906 (US)
(72) Inventor: EPPERLY, William, Robert, New Canaan, CT 06840 (US); SULLIVAN, James, Christopher, Norwalk, CT 06854 (US); SPRAGUE, Barry, Normand, West Haven, CT 06516 (US); O'LEARY, John, Henry, Danbury, CT 06810 (US)
(74) Representative: VOSSIUS & PARTNER
(86) International application number: US8802751
(87) International publication number: WO8902781

(56) References cited:
- DE-A- 2 657 617
- FR-A- 2 373 327

## Description

The present invention relates to a process for the reduction of nitrogen oxides (NOₓ) in the effluent, especially the oxygen-rich effluent, from the combustion of a carbonaceous fuel while minimizing the production of other pollutants, such as ammonia (NH₃) and/or carbon monoxide (CO).

Carbonaceous fuels can be made to burn more completely, and with reduced emissions of carbon monoxide and unburned hydrocarbons, when the oxygen concentrations and air/fuel ratios employed are those which permit high flame temperatures. When fossil fuels are used in suspension fired boilers such as large utility boilers, temperatures above about 1093°C (2000°F) and typically about 1204°C (2200°F) to about 1649°C (3000°F) are generated. Unfortunately, such high temperatures, as well as hot spots of higher temperatures, tend to cause the production of thermal NOₓ, the temperatures being so high that free radicals of oxygen and nitrogen are formed and chemically combine as nitrogen oxides. Nitrogen oxides can form even in circulating fluidized bed boilers which operate at temperatures which typically range from 704°C (1300°F) to 927°C (1700°F), as well as gas turbines and diesel engines.

Nitrogen oxides are troublesome pollutants which are found in the combustion effluent streams of boilers when fired as described above, and comprise a major irritant in smog. It is further believed that nitrogen oxides can undergo a process known as photo-chemical smog formation, through a series of reactions in the presence of sunlight and hydrocarbons. Moreover, nitrogen oxides comprise a significant contributor to acid rain.

Unfortunately, the temperatures within a suspension fired or circulating fluidized bed boiler render most common methods of reducing NOₓ concentrations, such as effluent scrubbing or catalyst grids, either uneconomical, infeasible, or both, particularly when combined with the need to minimize the production of other pollutants such as ammonia (NH₃) and/or carbon monoxide (CO).

Processes and compositions for the reduction of nitrogen oxides in an effluent from the combustion of a carbonaceous fuel have been developed extensively over recent years. With the increased attention to the health risks and environmental damage caused by agents such as smog and acid rain, it is expected that NOₓ reduction research will continue to be pursued.

In the past, most processes for the reduction of nitrogen oxides levels have concentrated on achieving maximum NOₓ reductions without addressing the problems raised by the production of other pollutants, such as ammonia and carbon monoxide. More recently, in a unique application of NOₓ reducing principles, Epperly, Peter-Hoblyn, Shulof and Sullivan in EP-A-306 515, which is post-published and therefore not revelent to the question of inventive step, discloses a method of achieving substantial NOₓ reductions without the production of a major amount of other pollutants through a multiple stage injection process. The disclosed process, though, is more concerned with maintaining a low level of other pollutants than with achieving a maximum amount of nitrogen oxides reduction because each injection is designed not to maximize NOₓ reduction but to minimize the production of other pollutants.

Although effective for reducing the level of nitrogen oxides in an effluent, the fact that the NOₓ reduction is not maximized at each injection indicates that further reductions are possible. Furthermore, even in the prior art disclosures which teach methods which may lead to a lessened production of other pollutants, most do so under relatively static conditions and do not account or compensate for changes in effluent conditions, such as effluent temperature variations as load varies, which are often encountered. There exists a present need, therefore, for a process which can achieve maximum nitrogen oxides reductions without the production of substantial amounts of other pollutants under practical effluent conditions.

The present invention meets this need and provides the ability to control NOₓ in concert with other pollutants under varying as well as constant load conditions in a manner and to a degree never before available. According to one aspect, the process comprises introducing (most commonly by injecting) a NOₓ reducing treatment agent into an effluent according to a NOₓ reducing treatment regimen under conditions such that the treatment agent is operating on the high temperature or right side of its nitrogen oxides reduction versus effluent temperature curve, especially on the high temperature or right side of the curve plateau.

An object of the present invention is to achieve significant reductions in nitrogen oxides levels without the production of substantial amounts of other pollutants by effecting a treatment regimen while monitoring the condition of the effluent and, when a change in effluent condition is observed, adjusting the treatment regimen by varying one or more treatment regimen parameters to effect an adjusted treatment regimen which operates on its nitrogen oxides reduction versus effluent temperature curve further to the right than did the originally-effected treatment regimen on its nitrogen oxides reduction versus effluent temperature curve.

Another object of the present invention is to achieve significant reductions in nitrogen oxides levels without the production of substantial amounts of other pollutants by determining the nitrogen oxides reduction versus effluent temperature curves for each of a plurality of treatment regimen and effecting the treatment regimen which will, under the effluent condition currently existing, operate furthest to the right on its curve than the others.

Still another object of the present invention is to achieve significant reductions in nitrogen oxides levels without the production of substantial amount of other pollutants by effecting a treatment regimen and adjusting the position of introduction of the treatment regimen to cause the introduction to be performed at a different effluent temperature and thereby effect the treatment regimen to operate more towards the right side of the plateau of its nitrogen oxides reduction versus effluent temperature curve.

Yet another object of the present invention is to achieve significant reductions in nitrogen oxides levels without the production of substantial amounts of other pollutants by effecting a treatment regimen under conditions effective to reduce the effluent nitrogen oxides concentration and then varying one or more treatment regimen parameters to shift the treatment regimen nitrogen oxides reduction versus effluent temperature curve towards the right side of the curve plateau.

Still another object of the present invention is to achieve significant reductions in nitrogen oxides levels without the production of substantial amounts of other pollutants by effecting a treatment regimen, determining the position on its nitrogen oxides reduction versus effluent temperature curve at which the treatment regimen is operating and varying one or more treatment regimen parameters so that the varied treatment regimen is operating on its nitrogen oxides reduction versus effluent temperature curve further to the right.

Another object of the present invention is to achieve significant reductions in nitrogen oxides levels without the production of substantial amounts of other pollutants by effecting a treatment regimen and varying one or more treatment regimen parameters to drive the reaction or series of reactions by which the treatment regimen reduces nitrogen oxides towards a reduction of the production of other pollutants while substantially maintaining the level of nitrogen oxides reductions.

Yet another object of the present invention is to achieve significant reductions in nitrogen oxides levels without the production of substantial amounts of other pollutants by effecting a treatment regimen while monitoring boiler operating load and varying one or more treatment regimen parameters when a significant change in boiler load is observed to effect an adjusted treatment regimen.

Another object of the present invention is to achieve significant reductions in nitrogen oxides levels without the production of substantial amounts of other pollutants by effecting a treatment regimen under conditions where the treatment regimen is operating on its nitrogen oxides reduction versus effluent temperature curve at a position to the right of the curve plateau and adjusting one or more treatment regimen parameters to operate the adjusted treatment regimen towards its curve plateau.

Yet another object of the present invention is to maintain nitrogen oxides levels in the effluent below a certain specified amount while also maintaining the level of other pollutants below a certain specified amount by effecting treatment regimen which operate toward or on the right side of their nitrogen oxides reduction versus effluent temperature curve.

Another object of the present invention is to accomplish any or all of the above objects when boiler operating conditions and loads are varying.

The solution according to the invention is defined in the appended claims.

These and other objects will be described and the present invention better understood and its advantages more apparent in view of the following detailed description, especially when read with reference to the appended drawings, wherein:
FIGURES 1 and 1a graphically represent the results of Example I;
FIGURE 2 graphically represents the results of Examples IIa, IIb and IIc;
FIGURES 3a-c graphically represent the results of Examples IIIa, IIIb and IIIc;
FIGURES 3d-f graphically represent the results of Examples IIIa, IIIb and IIIc presented as described below; and
FIGURE 4 graphically represents the results of Example IV.

As used in this description, the term:
"nitrogen oxides reduction versus effluent temperature curve" refers to a plot of the data points generated when a treatment regimen is effected by introducing a treatment agent into an effluent over a range of effluent temperatures and the nitrogen oxides reduction at each introduction temperature is measured (and usually expressed in terms of percent of baseline);
"curve plateau" refers to that region of a nitrogen oxides reduction versus effluent temperature curve where the NOₓ reduction is substantially maximized over a range of temperatures and preferably encompasses at least two data points (of course a skilled artisan will recognize that a curve plateau will not necessarily be flat due to "data scatter" and other practical data generation effects);
"high temperature side" or "right side" refer to any point on the subject nitrogen oxides reduction versus effluent temperature curve which represents the reduction achieved when a treatment regimen is effected at a higher temperature than the original temperature at which a treatment regimen was effected;
"treatment regimen" refers to the introduction (such as by injection) of a treatment agent into an effluent and the conditions under which the treatment agent is introduced, such as treatment agent components (by which is meant the ingredients of the treatment agent), treatment agent dilution (by which is meant the concentration of treatment agent components when the treatment agent used comprises a solution), relative presence of treatment agent components (by which is meant the relative weight ratio or fractions of the components which form the chemical formulation which makes up the treatment agent), etc.;
"treatment agent" refers to a composition comprising at least one reductant chemical, i.e., a pollution reducing chemical capable of reducing NOₓ, sulfur oxides (SOₓ) or other pollutants by facilitating a reaction (the term "reaction" will be understood to refer to a single reaction or a series of reactions), and, preferably, with a solvent;
"effluent condition" or "condition of the effluent" refers to the existing state of any one or more parameters which can be used to characterize the effluent, such as temperature, nitrogen oxides level, ammonia level, carbon monoxide level, excess oxygen level, sulfur oxides level, etc.;
"normalized stoichiometric ratio" (NSR) refers to the ratio of the concentration of reducing-radicals such as NHₓ radicals (NHₓ radicals, with x being an integer, are believed to be the moiety contributed by the treatment agent which facilitates the series of reactions resulting in NOₓ breakdown) to the concentration of nitrogen oxides in the effluent and can be expressed as [NHₓ]/[NOₓ] (alternatively, the molar ratio of the treatment agent to the NOₓ concentration can be used in place of NSR when the chemistry of reduction is not well defined; the term NSR as used herein will also be understood to encompass molar ratio when appropriate);
"urea" and "ammonia" refer to the compounds urea and ammonia themselves, as well as compounds equivalent in effect. Among those compounds are ammonium carbonate, ammonium formate, ammonium oxalate, ammonium hydroxide and various stable amines, and their solutions in water;
"oxygenated hydrocarbon" refers to substituted and unsubstituted, straight or branch-chain aliphatic and cyclic, heterocyclic and aromatic hydrocarbons having at least one oxygen either in or bonded directly to the primary hydrocarbon chain or in or bonded directly to a substituent group, and mixtures thereof, typical substituent groups of which include carboxylic acid groups (COOH), peroxide groups (-O-O-), carbonyl groups (C=O), hydroxy groups (OH), ether groups (-O-), ester groups (COOR), etc.;
"hydroxy amino hydrocarbon" refers to any cyclic, heterocyclic, aromatic, straight or branched chain, substituted or unsubstituted hydrocarbon having at least one substituent comprising a hydroxy or a carboxy group and at least one primary, secondary or tertiary amino group;
"ammonium salt of an organic acid having a carbon to nitrogen ratio of greater than 1:1" refers to salts which can be formed by the neutralization of ammonium hydroxide with an organic acid, preferably a carboxylic acid (i.e., an acid having one or more carboxyl (COOH) groups). If the acid has more than one carboxylate group, they may be partially or completely neutralized by ammonium hydroxide. The ratio of carbon to nitrogen in the salt is greater than 1:1, meaning that there is more than one carbon per each nitrogen in the compound, most preferably there are at least two carbons per each nitrogen in the compound;
"five or six-membered heterocyclic hydrocarbon having at least one cyclic nitrogen" refers to a cyclic five or six member hydrocarbon in which one or more of the atoms in the ring is nitrogen. The cyclic compounds can be either saturated or unsaturated;
"heterocyclic hydrocarbon having at least one cyclic oxygen" refers to a ringed hydrocarbon compound having at least one ring oxygen;
"alcohol" refers to a hydrocarbon derivative in which one or more hydrogen atoms have been replaced by a hydroxy group;
"sugar" refers to a number of useful saccharide materials which are capable of decreasing the NOₓ concentration in an effluent under conditions as described herein, including non-reducing and reducing water soluble mono-saccharides and the reducing and non-reducing polysaccharides and their degradation products, such as pentoses including aldopentoses, methyl pentoses, keptopentoses like xylose and arabinose, deoxyaldoses like rhaminose, hexoses and reducing saccharides such as aldo hexoses like glucose, galactose and mannose, ketohexoses like fructose and sorbose, disaccharides like lactose and maltose, non-reducing disaccharides like sucrose and other polysaccharides such as dextrin and raffinose, hydrolyzed starches which contain as their constituents oligosacoharides, and water dispersible polysaccharides;
"furfural" refers to furfural itself as well as substituted furfural. Typical substituents include side chains comprising straight and branched-chain, substituted and unsubstituted aliphatic groups, oxygenated hydrocarbon groups and amino groups;
"amino acid" refers to any organic compound containing an amine group and a carboxylic acid group;
Appropriate treatment agents known as being effective at the reduction of nitrogen oxides include aqueous solutions of urea or ammonia, or gaseous ammonia, as disclosed by Arand et al. in US-A-4,208,386, and by Bowers WO-87/02024 entitled "Reduction of Nitrogen-Based Pollutants Through the Use of Urea Solutions Containing Oxygenated Hydrocarbon Solvents", or an aqueous solution of ammonia or gaseous ammonia itself, as disclosed by Lyon in US-A-3,900,554, the disclosures of which are incorporated herein by reference.

Other suitable treatment agents for introduction into an effluent for nitrogen oxides reductions are disclosed in EP-A-301 085; EP-A-304 480; EP-A-305 503; EP-A-309 570; and WO 87/02023.

EP-A-301 085 discloses using a mixture comprising ammonia (NH₃) and an enhancer selected from, among others, a lower carbon alcohol, such as glycerol; furfural derivatives such as hydroxymethyl furfural; hydroxyl amino hydrocarbons such as monoethanolamine; protein-containing compositions such as skimmed milk or powdered milk; and mixtures of ortho-, meta-, and para-methyl phenols, such as cresylic acid; EP-A-304 480 discloses using a sugar, such as sucrose; EP-A-305 503 discloses using a heterocyclic hydrocarbon having at least one ring oxygen atom such as furfural; EP-A-309 570 discloses using a hydroxy amino hydrocarbon such as alkanolamines, amino acids and protein-containing compositions; and WO 87/02023 discloses using a solution comprising at least one additive compound selected from guanidine, guanidine carbonate, biguanide, guanylurea sulfate, melamine, dicyandiamine, calcium cyanamide, biuret, 1,1'-azobisformamide, methylol urea, methylol urea-urea condensation product, dimethylol urea, methyl urea, dimethyl urea and hexamethylenetetramine. Except for WO 87/02023, these patent applications were published after the filing date of this application and are therefore not relevant to the question of inventive step.

The disclosed treatment agents include aqueous solutions of ammonia or urea, enhanced with suitable enhancers such as hexamethylenetetramine (HMTA), a paraffinic hydrocarbon, an olefinic hydrocarbon, an aromatic hydrocarbon, an oxygenated hydrocarbon (such as acetone, sugar, especially sucrose, d-galactose and molasses, an alcohol, especially ethylene glycol, methanol, furfurylalcohol, 1,3 butylene glycol, tetrahydrofuryl alcohol, 2,5-furandimethanol, a lignin derivative, especially NH₄-lignosulfonate and calcium lignosulfonate, a carboxylic acid, especially 2-furoic acid, gluconic acid, citric acid, formic acid, coumalic acid, 2,3,4,5-tetracarboxylic acid, furylacrylic acid, barbituric acid, oxalic acid and mucic acid, a peroxide, an aldehyde, an ether, an ester, a ketone, glycerin, tetrahydrofuran, acetone, 1,3 dioxolane, 1,4 dioxane, tetrahydrofuran, furfurylamine, n-butyl acetate, methylal, furan, fish oil, furfuryl acetate, tetrahydrofuran tetrahydrofurylamine, tetrahydropyran, mannitol, hexamethylenediamine and acetic anhydride), an ammonium salt of an organic acid having a carbon to nitrogen ratio of greater than 1:1 (such as ammonium acetate, ammonium and diammonium adipate, ammonium benzoate, ammonium binoxalate, ammonium caprylate, ammonium, diammonium and triammonium citrate, ammonium crotonate, ammonium and diammonium dodecanoate, ammonium and diammonium fumarate, ammonium heptanoate, ammonium linolenate, ammonium and diammonium malate, ammonium mono butyrate, ammonium oleate, ammonium and diammonium pthalate, ammonium propionate, ammonium salicylate, ammonium and diammonium succinate ammonium and diammonium tartarate, and ammonium, diammonium and triammonium trimellitate), a hydroxy amino hydrocarbon (such as alkanolamines, amino acids and protein-containing compositions), a heterocyclic hydrocarbon having at least one cyclic oxygen (such as furfural and derivatives of furfural), a five or six membered heterocyclic hydrocarbon having at least one cyclic nitrogen (such as piperazine, piperidine, pyridine, pyrazine, pyrazole, imidazole, oxazolidone, pyrrole, pyrrolidine), hydrogen peroxide, guanidine, guanidine carbonate, biguanidine, guanylurea sulfate, melamine, dicyandiamide, calcium cyanamide, biuret, 1,1'-azobisformamide, methylol urea, methylol urea-urea condensation product, dimethylol urea, methyl urea, dimethyl urea and mixtures thereof, as well as aqueous solutions of the enhancers themselves.

Additional treatment agents which may be introduced into an effluent to reduce the effluent nitrogen oxides level under certain conditions comprise hydrocarbons, such as an oxygenated hydrocarbon, a nitrogenated hydrocarbon or hydrogen peroxide. Such treatment agents include monoethanolamine and amino acetic acid (glycine). Ethylene glycol, methahol, furfural, sugar and glycerol are preferred oxygenated hydrocarbons of these, with ethylene glycol, methanol and sugar being most preferred. Other hydrocarbons which can advantageously be employed include nitrogenated hydrocarbons such as monomethylamine, triethylene tetramine, hexamethylenediamine, tetraethylene pentamine, bis-hexamethylene triamine, polyamine HpA, 1,2-diaminopropane, N,N-dimethylethylenediamine, tetramethylethylenediamine, 2-methylaziridine, bis (3-aminopropyl) ethylenediamine, tetramethyldiaminomethane, ethylenediamine and diethylenetriamine. Mixtures of polyols, such as those mixtures of low molecular weight polyols known as hydrogenated starch hydrosylates, can also be advantageously employed. Additional hydrocarbons which are suitable for use in the present invention include paraffinic, olefinic and aromatic hydrocarbons, including naphtha-based hydrocarbons, and mixtures thereof.

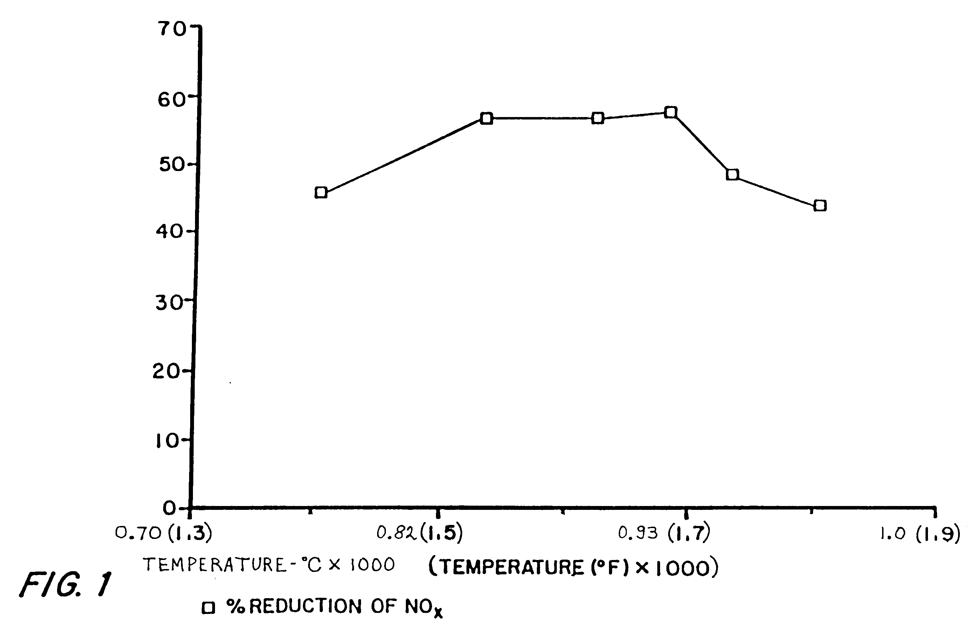

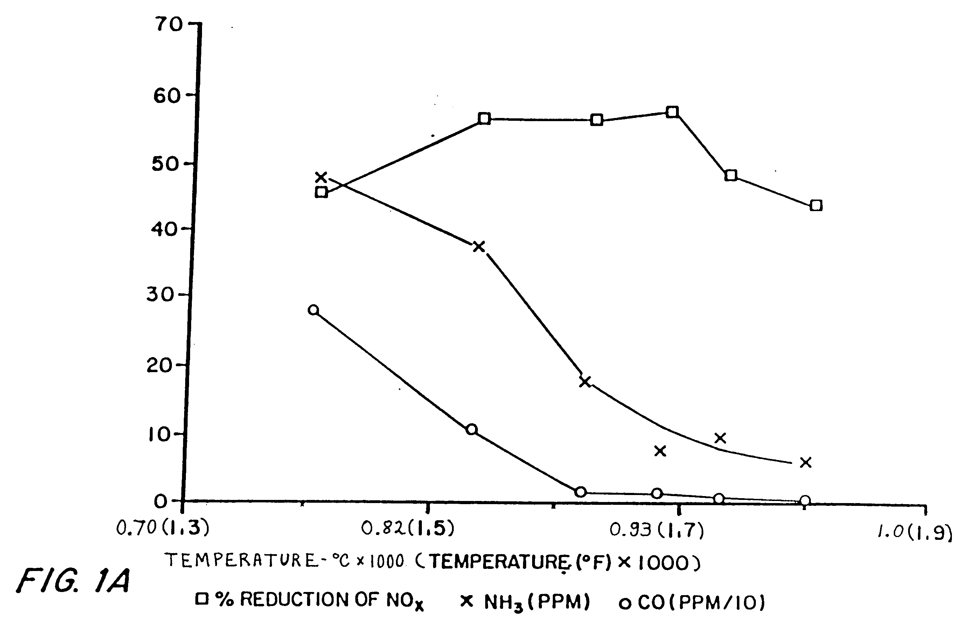

The nitrogen oxides reduction versus effluent temperature curve for a treatment regimen comprises a curve plateau, which, as described above, indicates where the NOₓ reduction elicited by the treatment regimen is maximized and that such maximum level is substantially maintained over a range of effluent temperatures. An exemplary nitrogen oxides reduction versus effluent temperature curve for a treatment regimen disclosed as being an effective nitrogen oxides reducing treatment regimen is reproduced as Figure 1. Figure 1 is the nitrogen oxides reduction versus effluent temperature curve for a treatment regimen comprising a treatment agent which comprises 10% by weight of urea, 4% by weight of hexamethylenetetramine and 10% by weight of furfural, which is injected into an effluent at the rate of 300 ml/hr. and an excess of oxygen in the effluent of 3.0% by volume.

The curve plateau for Figure 1 will be recognized as the nitrogen oxides reduction achieved by effecting the disclosed treatment regimen between effluent temperatures of 832°C (1530°F) and 916°C (1680°F) (the skilled artisan will recognize that due to normal experimental variations, the curve plateau, and indeed the nitrogen oxides reduction versus effluent temperature curve itself, for any given treatment regimen will show minor variations each time it is experimentally derived). This temperature range, it will be observed, provides the maximum nitrogen oxides reduction for this treatment regimen.

Merely maximizing the nitrogen oxides reduction, though, is not enough. Of concern is not only the nitrogen oxides level in the effluent, but also the level of other pollutants, such as ammonia and carbon monoxide which are often produced in the NOₓ reducing process. For instance, when NOₓ reduction is achieved by using treatment agent comprising urea or ammonia alone, ammonia is produced, whereas when NOₓ reduction is achieved by use of a treatment agent comprising urea or ammonia enhanced with a disclosed enhancer, or by use of a hydrocarbon treatment agent, ammonia and carbon monoxide are produced.

The presence of ammonia in the effluent should be avoided because, among other reasons, it can react with SO₃⁼ to form ammonium bisulfate which can foul heat exchange surfaces in a boiler. Moreover, ammonia has detrimental effects on ambient air quality, as has carbon monoxide. If the maximization of the nitrogen oxides level brings about the production of significant amounts of other pollutants, then such maximization is counterproductive. As discussed above, the prior art has attempted to rectify this by eliciting only that level of nitrogen oxides reduction as can be achieved without the production of other pollutants.

Surprisingly, a process for maximizing the nitrogen oxides reduction while minimizing the production of other pollutants has now been found. Alternatively, the process can achieve desired specified "target" maximum levels of nitrogen oxides and other pollutants in the effluent. It has been determined that operation on the high temperature or right side of the nitrogen oxides reduction versus effluent temperature curve of a treatment regimen substantially reduces the production of other pollutants such as ammonia and carbon monoxide. In fact, it has been found that operation on a nitrogen oxides reduction versus effluent temperature curve plateau (or region adjacent the plateau) at any point further to the right of present operation will reduce the production of other pollutants while substantially maintaining maximum nitrogen oxides reduction or the target level of NOₓ in the effluent.

This surprising and advantageous result is aptly demonstrated by reference to Figures 1 and 1a, which graphically represent the results of Example I. As previously discussed, Figure 1 reproduces the nitrogen oxides reduction versus effluent temperature curve for a treatment regimen which is effective at reducing the nitrogen oxides level in an effluent from the combustion of a carbonaceous fuel. Figure 1a reproduces that same nitrogen oxides reduction versus effluent temperature curve and further has superimposed thereon the ammonia and carbon monoxide levels observed at each point on the curve. It can be seen that although NOₓ reduction is maximized throughout the curve plateau (i.e., injection in the effluent temperature range of about 832°C (1530°F) to about 916°C (1680°F)), performing the injection further to the right on the curve plateau (i.e., at higher temperatures in the plateau temperature range) leads to substantially reduced production of ammonia and carbon monoxide.

Operation further to the right on the curve can be achieved in one of two methods. First, the position on the curve at which the treatment regimen being used is being effected can be translated further to the right by effecting the treatment regimen at a higher effluent temperature. It will readily be observed by reference to Figures 1 and 1a that effecting the treatment regimen at a higher effluent temperature will translate the position of operation on the curve further to the right, thereby reducing the production of other pollutants while maintaining maximum nitrogen oxides reduction.

Effecting the treatment regimen at a higher effluent temperature can be accomplished by performing the treatment agent introduction at a location where the effluent temperature is higher, i.e., at a location upstream (or closer to the flame zone) from the original introduction location. This method for effecting the treatment regimen at a higher effluent temperature can oftimes be impractical because access to the boiler interior is often limited to specific points, due to water tubing, etc. Introduction at a location where the effluent temperature is at a desired level, therefore, is often not possible. Operation at a much higher effluent temperature can translate the position of operation on the curve too far to the right and off the plateau, thereby decreasing NOₓ reduction.

Altering the operating load of the boiler (i.e., fuel supply rate) will also cause a change in effluent temperature and, theoretically at least, be used to increase effluent temperature at the treatment agent introduction location by increasing operating load. In practice, though, altering the boiler operating load is not preferred because the effluent condition is altered in more than the temperature parameter, as will be discussed in more detail below. Nitrogen oxides level, as well as other parameters such as ammonia level and carbon monoxide level, are altered along with effluent temperature. Furthermore, the boiler operating load is usually maintained at a certain level to produce a specific, required output and is not available as a factor which can be altered to achieve NOₓ reduction.

The second method for operating further to the right on the curve is to vary one or more of the parameters of the treatment regimen being effected. For instance, the varied parameter can be the components of the treatment agent, the dilution of the treatment agent when in solution with a concommitant variation in treatment agent introduction rate to maintain the NSR of the treatment regimen (when a non-nitrogenous treatment agent is being introduced, it is the weight ratio which is maintained when dilution and introduction rate are varied), the relative presence of treatment agent components, or combinations of any of the above. By varying treatment regimen parameters, the original nitrogen oxides reduction versus effluent temperature curve is replaced by the nitrogen oxides reduction versus effluent temperature curve for the varied treatment regimen. Selection of the parameter(s) to be varied and in what way they are varied can replace the original curve with a curve which is "shifted" to the left, thereby leading to operation on the shifted curve at a position further to the right.

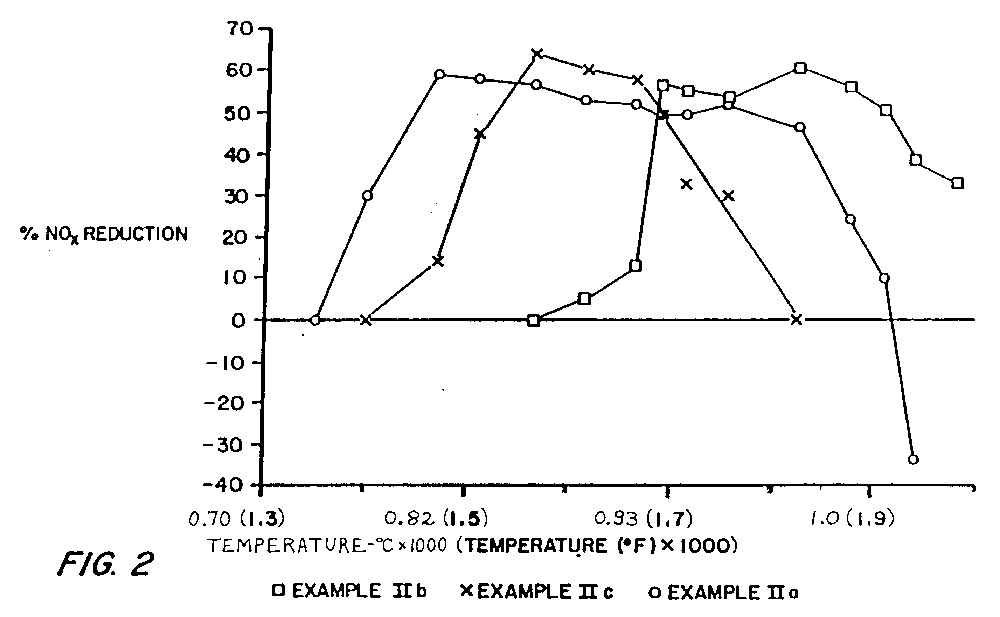

This treatment regimen varying method for operating further to the right on the curve is illustrated by reference to Figure 2, which graphically represents the results of Example II. Figure 2 provides the nitrogen oxides reduction versus effluent temperature curve plateau for three treatment regimens which each comprise introducing a treatment agent into an effluent over a range of effluent temperatures and at an introduction rate of 300 ml/hr. and an excess of oxygen of 3.0% by volume. The treatment agent introduced for the first treatment regimen comprises an aqueous solution of 10% urea and 15% furfural; the treatment agent introduced for the second treatment regimen comprises an aqueous solution of 10% urea; and the treatment agent introduced for the third treatment regimen comprises an aqueous solution of 10% urea and 15% ethylene glycol. It will readily be observed that varying the treatment regimen by altering the treatment agent components between the three illustrated treatment agents can shift or alter the curve and thereby enable maintainance of the treatment regimen operating on the right side of the curve.

For example, if the treatment regimen being effected comprises a treatment agent which is an aqueous solution of 10% urea, and the effluent temperature at the treatment location is 957°C (1755°F), thereby operating toward the left side of the treatment regimen nitrogen oxides reduction versus effluent temperature curve plateau, then varying the treatment regimen by varying the treatment agent components by injecting 15% furfural with the 10% urea replaces the original curve with a curve at which introduction at that effluent temperature operates further towards the right side of the curve plateau. Likewise, if the treatment regimen being effected comprises a treatment agent which is an aqueous solution of 10% urea and 15% furfural, and the effluent temperature at the point of introduction is 907°C (1665°F), thereby operating near the midpoint of the treatment regimen nitrogen oxides reduction versus effluent temperature curve plateau, then varying the treatment regimen to vary the treatment agent to replace the 15% furfural with 15% ethylene glycol replaces the original curve with a curve at which introduction at that effluent temperature operates further towards the right side of the curve plateau.

Of course, the two methods for operating further to the right on the curve plateau disclosed according to the present invention are not mutually exclusive, but can in fact be combined. In other words, the effluent temperature can be varied along with one or more treatment regimen parameters.

Although it is possible to translate the performance of the treatment regimen further to the right on its curve plateau by effecting the treatment regimen at a higher temperature (i.e., by injecting at a location where the effluent temperature is higher), as discussed above it is more likely that the NOₓ reduction will be maximized while minimizing the production of other pollutants by the second of the two disclosed methods, i.e., by varying one or more treatment regimen parameters. The adjustment (or varying) of the treatment regimen is performed to drive the reaction by which the treatment agent facilitates the reduction of NOₓ towards the right side of the curve plateau.

As discussed above, varying one or more treatment regimen parameters serves to produce an adjusted (or new) treatment regimen which will have a different (or shifted) nitrogen oxides reduction versus effluent temperature curve compared to the original treatment regimen. By prior analysis of possible treatment regimens and knowledge of their particular nitrogen oxides reduction versus effluent temperature curves, one can determine the treatment regimen that will, when effected in place of the original treatment regimen, operate further to the right on its curve than the original treatment regimen operated on its curve. In fact, one can predict which will operate furthest to the right on the curve plateau under the particular conditions at which injection is desired (i.e., the effluent temperature at the location for injection).

Furthermore, if the effluent temperature at the injection location is known, prior knowledge of the nitrogen oxides reduction versus effluent temperature curves of available treatment regimens will allow initial selection of the treatment regimen which operates furthest to the right while remaining on the curve plateau, eliminating the need for varying any of the parameters, except when boiler operating load changes.

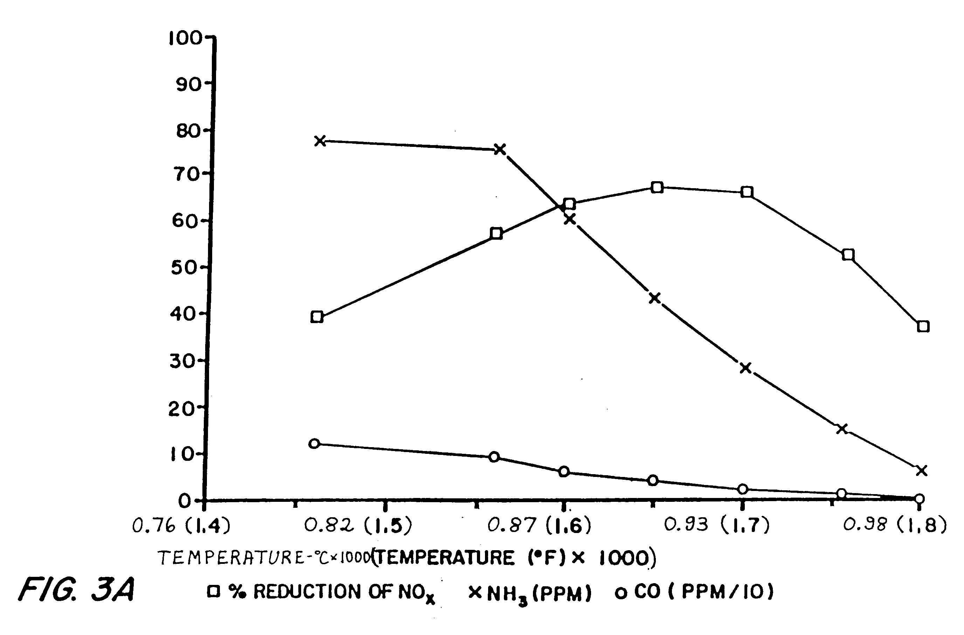

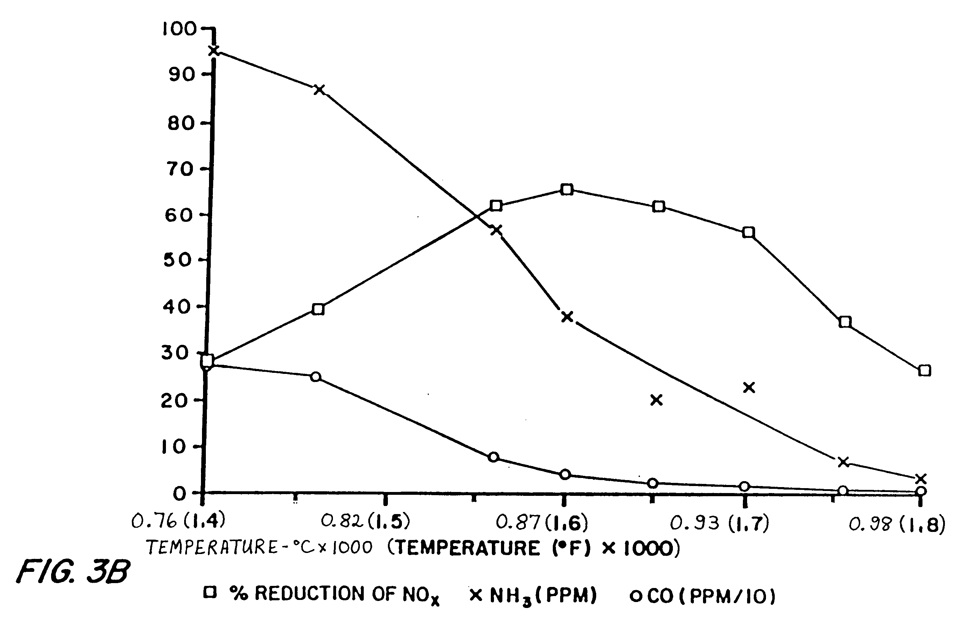

For instance, as illustrated in Figures 3a-3c, which graphically reproduce the, results of Examples IIIa-IIIc, the nitrogen oxides reduction versus effluent temperature curve for a plurality of treatment regimens, such as aqueous solutions comprising 10% by weight of urea and varying amounts of ethylene glycol which are introduced into an effluent over a range of effluent temperatures and at an introduction rate of 300 ml/hr and an excess of oxygen of 3.0% by volume, can be plotted. The data which comprises the plots can then be compared to determine which treatment regimen should be effected according to this invention for the effluent condition existing at the injection location.

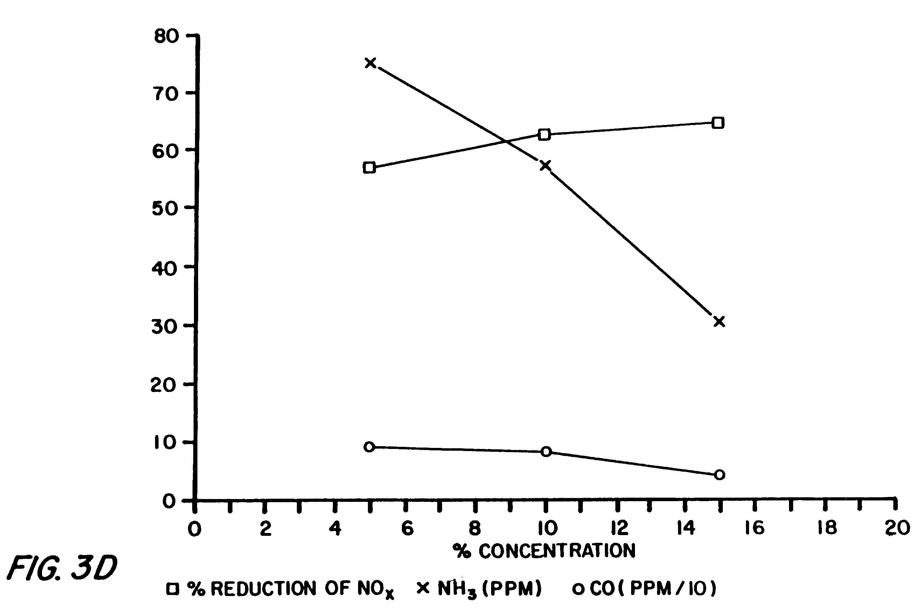

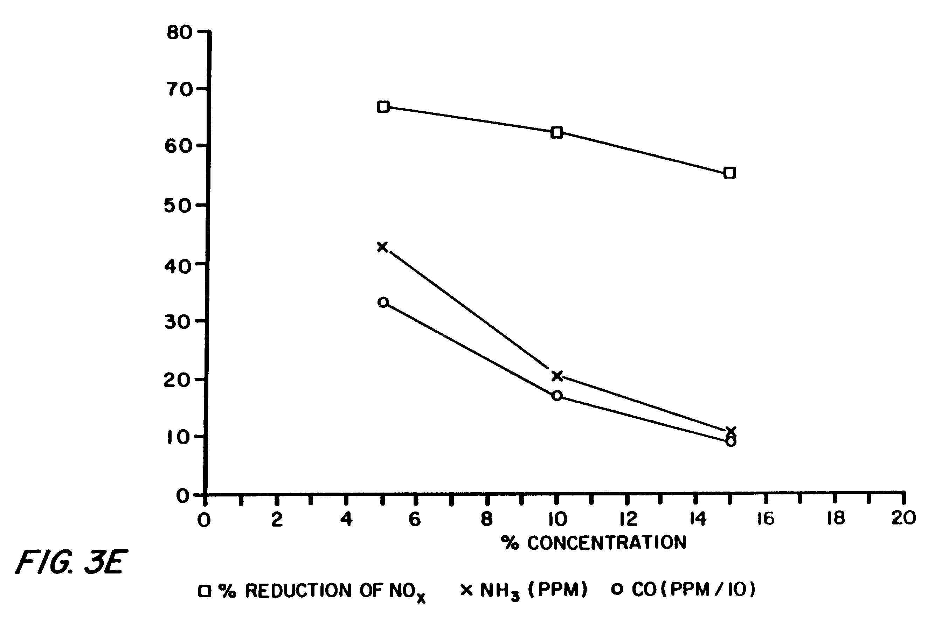

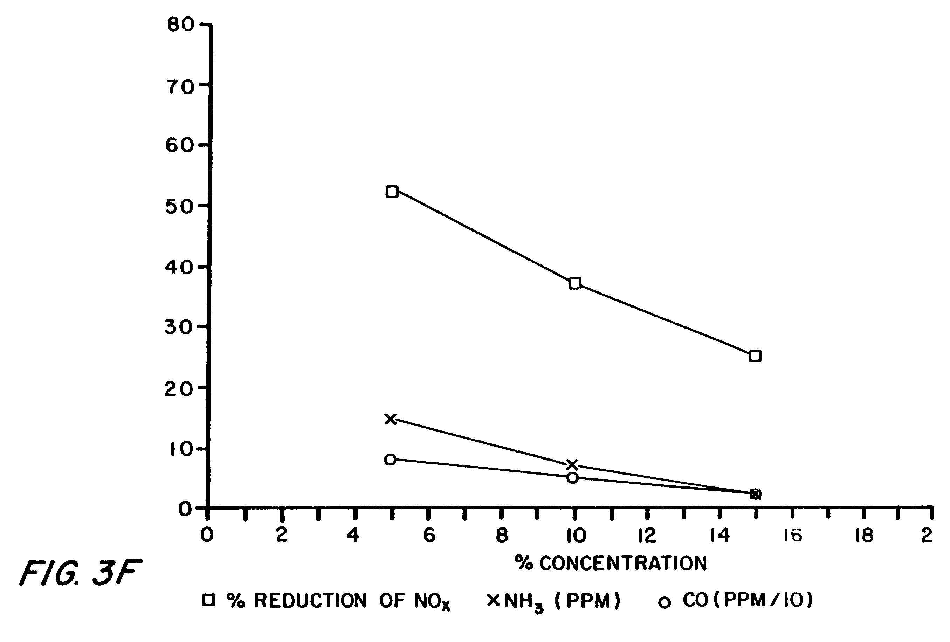

This is more clearly understood by reference to Figures 3d-3f, which graphically express the nitrogen oxides reduction, ammonia level and carbon monoxide level for each of the three treatment regimens represented by Figures 3a-3c, at three particular locations of introduction effluent temperatures. If the effluent temperature at the introduction location is 849°C (1560°F), the desired treatment regimen, therefore, is the regimen which comprises the treatment agent having 15% ethylene glycol, as illustrated in Figure 3d. If the effluent temperature at the introduction location is 899°C (1650°F), the desired treatment regimen, therefore, is the regimen which comprises the treatment agent having 10% ethylene glycol, as illustrated in Figure 3e (the 15% ethylene glycol treatment regimen is not desired at 899°C (1650°F) because, although Figure 3e indicates ammonia and carbon monoxide levels are low, NOₓ reduction is also lower than the maximum, indicating that the 15% ethylene glycol treatment regimen is operating on its nitrogen oxides reduction versus effluent temperature curve to the right and off the curve plateau). If the effluent temperature at the introduction location is 957°C (1755°F), the desired treatment regimen, therefore, is the regimen which comprises the treatment agent having 5% ethylene glycol, as illustrated in Figure 3f, because both the 10% ethylene glycol and 15% ethylene glycol treatment regimens are operating to the right and off their curve plateau.

Another advantageous aspect of the present invention is in the situation where an effluent from the combustion of a carbonaceous fuel is required to have no more than a maximum level of another pollutant, such as ammonia and/or carbon monoxide. The process of this invention can be used to achieve the maximum possible NOₓ reduction, or a target level of NOₓ reduction, while maintaining the level of such other pollutants under such maximum level.

One way this can be accomplished is using the normalized stoichiometric ratio (NSR) and/or weight ratio of the treatment regimen being effected. It will be recognized that as the NSR or weight ratio of a treatment regimen increases, the nitrogen oxides reduction elicited by that treatment regimen increases as does the production of other pollutants. This fact can be utilized by effecting a treatment regimen at a relatively low NSR or Weight ratio, for instance at an NSR of about 1.0 to about 1.5, and at the right side of the treatment regimen curve plateau (the treatment regimen can be effected at the right side of its curve plateau by any of the methods for effecting a treatment agent at the right side of its curve plateau discussed herein). The NSR or weight ratio of the treatment agent can then be increased (by increasing the introduction rate of the treatment agent) until the maximum level of other pollutant is reached. If there is more than one other pollutant which has a maximum level, the NSR or weight ratio is increased until the first of such other pollutants reaches its maximum level. In this way, the highest possible NOₓ reduction (or the desired target level of NOₓ) can be achieved while maintaining the effluent in a condition which is below the maximum level for other pollutants.

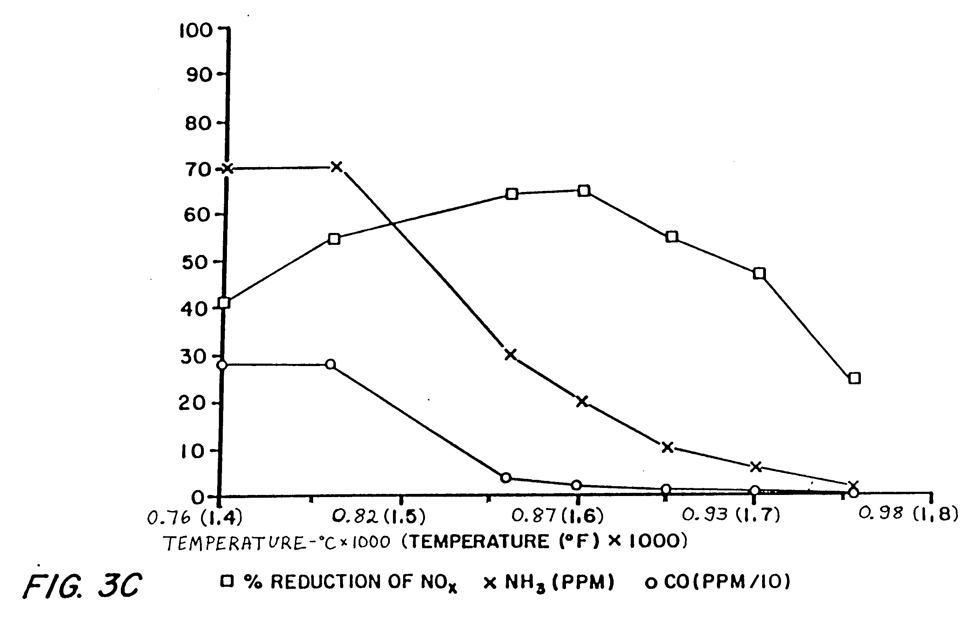

For example, a treatment regimen which comprises an aqueous solution of 10% urea and 15% ethylene glycol introduced into an effluent at an introduction rate of 300 ml/hr. and an excess of oxygen of 3.0% has a nitrogen oxides reduction versus effluent temperature curve which is graphically reproduced as Figure 3c, which graphically reproduces the results of Example IIIc. It will be observed by reference to Figure 3c that this treatment regimen is operating towards the left side of its curve at an effluent temperature of 846°C (1555°F), in the midsection of its curve at an effluent temperature of 885°C (1625°F), and towards the right side of its curve at an effluent temperature of 957°C (1755°F).

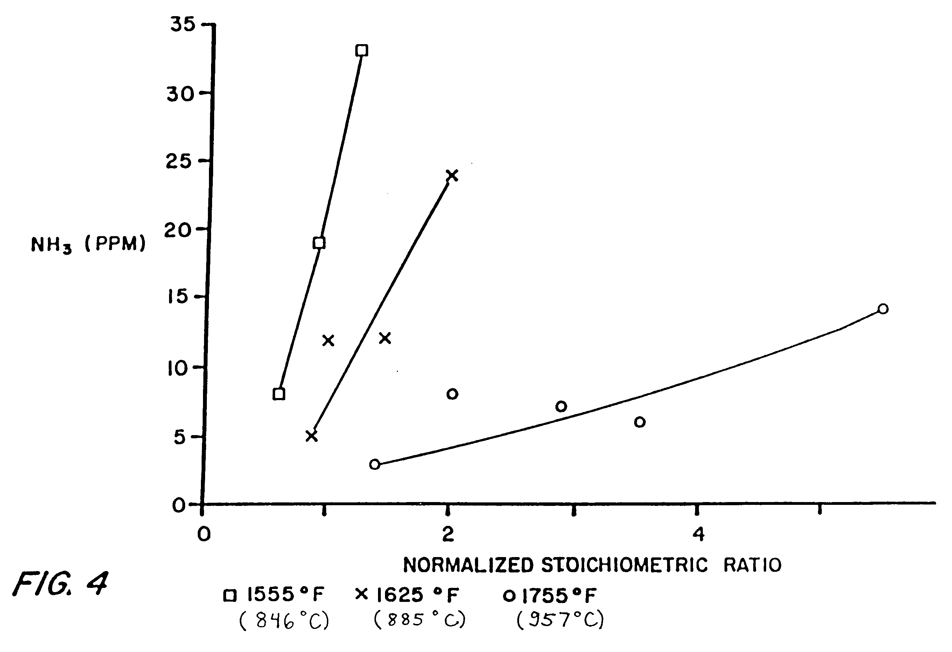

Increasing the treatment regimen NSR at these three points produces markedly different results. As illustrated in Figure 4, which graphically reproduces the results of Example IV, increasing the NSR when the treatment regimen is towards the left side of its nitrogen oxides reduction versus effluent temperature curve results in a sharp increase in the amount of ammonia produced. Increasing the NSR when the treatment regimen is in the midsection of the curve results also in a relatively sharp increase in the production of ammonia. Increasing the NSR when the treatment regimen is on the right side of its curve results in a gradual increase in the level of ammonia produced. When the treatment regimen is effected on the right side of its curve, therefore, higher nitrogen oxides reductions can be much achieved before a maximum level of ammonia is reached.

As illustrated in Figure 4, for a treatment regimen which comprises injecting a treatment agent of 10% urea and 15% ethylene glycol, if the maximum allowable level of ammonia is 15 parts per million (ppm), an NSR of 5.47 is achievable when the treatment regimen is effected on the right side of its curve, whereas NSRs of no more than about 1.5 are achievable when the treatment regimen is effected on the midsection or on the left side of the curve.

Similarly, when a target level of nitrogen oxides is desired, the NSR can be increased until the nitrogen oxides reduction is sufficient to attain that level of nitrogen oxides, provided that a maximum level of other pollutants is not surpassed. In this way, if the treatment regimen is operating on the right side of its curve plateau, the target level of NOₓ is attained while a minimum of other pollutants are produced.

In another advantageous aspect of this invention, the process of this invention can be used to reduce NOₓ levels to meet specified target levels while minimizing the production of other pollutants through "load following." "Load following" refers to a process which involves adjusting the treatment regimen which is being effected in response to the operating load at which the boiler is being fired. When the boiler operating load changes, a change in effluent temperature occurs. Such a change in temperature of the effluent, it will be apparent, causes the point of operation on the nitrogen oxides reduction versus effluent temperature curve for the current treatment regimen to be translated either to the left, and hence away from minimization of other pollutants, or to the right, potentially off the curve plateau and onto the right side slope of the curve, and hence away from maximum nitrogen oxides reduction.

This can be accomplished by the use of an apparatus which comprises means for delivering and introducing a treatment agent in a boiler, such as an injector with chemical supply pump means connected therewith; detector means for detecting effluent levels of nitrogen oxides, oxygen, ammonia, carbon monoxide, sulfur trioxide, etc. as well as effluent temperature, such as effluent probes conventionally known; a control means for controlling delivery of specific chemical formulations in response to the effluent condition to achieve the desired results, i.e., maximimum nitrogen oxides reductions, or reductions to specific nitrogen oxides levels, and minimum presence of other pollutants, or maintainance of other pollutants below a specified level, such as conventionally known data processing equipment.

By replacing the current treatment regimen with a new treatment regimen, i.e., by adjusting one or more treatment regimen parameters such as dilution and introduction rate of the treatment agent, components of the treatment agent and relative presence of treatment agent components, the nitrogen oxides reduction versus effluent temperature curve is shifted (i.e., replaced with a new nitrogen oxides reduction versus effluent temperature curve) so that operation after the change is once again towards the right side of the curve plateau.

Furthermore, as discussed above, a change in boiler operating load leads to more than merely a change in effluent temperature. Frequently, a change in boiler load produces a change in the effluent with regard to NOₓ level. This becomes especially important when there is a maximum level of other pollutants which has to be met or a target level of nitrogen oxides reduction which has to be attained. The change in NOₓ level can be measured directly or, preferably, can be determined using a load-dependent boiler characterization factor.

For a given boiler and fuel, the characterization factor relates the NOₓ level and temperature of the effluent at given locations to boiler load, and it is determined experimentally. With this information, the treatment regimen being effected at a given location can be adjusted immediately upon change of boiler operating load as measured by fuel supply rate, for example. As a result, when load is reduced, the treatment regimen feed rate is reduced to achieve the NSR or weight ratio needed to attain target reductions at that load and the treatment agent components are varied as necessary to respond to the temperature change resulting from the change in operating load. If the feed rate of the treatment regimen were not reduced, the NSR or weight ratio would be excessive in view of the lower level of NOₓ and excessive NH₃ and CO would be produced. Similarly, when boiler operating load is increased, the feed rate of the treatment regimen is increased to achieve the NSR or weight ratio needed at that load. Otherwise, the NSR or weight ratio would be low and NOₓ reduction would be inadequate. Again, the components of the treatment agent are adjusted to compensate for the effluent temperature change associated with the change in boiler operating load.

This characterization factor is dependent on boiler configuration, boiler geometry, effluent constituents such as oxygen, ammonia and carbon monoxide, fuel type and boiler load and can be determined experimentally. Several other parameters such as number of burners in service affect the characterization factor, but those that are mentioned above are most important. By reference to the characterization factor for a given boiler and fuel, the nitrogen oxides level and temperature at a given location can be determined to a sufficient degree of certainty to permit the determination of how the treatment regimen should be adjusted to correct for translation on the nitrogen oxides reduction versus effluent temperature curve which occurs when the operating load is changed and for the change in NSR.

The preferred embodiment for maximizing nitrogen oxides reduction and controlling the production of other pollutants is by effecting a first treatment regimen which operates at the effluent temperatures currently existing on the right hand slope, off the curve plateau, of the treatment regimen's nitrogen oxides reduction versus effluent temperature curve. By knowledge of the effluent temperature and the curve for a plurality of treatment regimens, this can be simply accomplished using means described above. Once done, the treatment regimen can be adjusted, by means which will be apparent to the skilled artisan upon reading this disclosure, to bring the operation thereof "up" and, advantageously but not necessarily, onto the curve plateau. In other words, the curve can be shifted to do so. By this method, it can be assured that the treatment regimen being effected is operating as far to the right while still on or near its curve plateau as possible. The nitrogen oxides reduction is thus substantially maximized while the production of other pollutants is thus controlled.

Another surprising aspect of this invention is in the use of a treatment regimen as a probe for effluent conditions. If the nitrogen oxides reduction versus effluent temperature curve (or, in fact, the ammonia or carbon monoxide production versus effluent temperature curves) for a treatment regimen is known, the effluent condition after that treatment regimen is effected will provide useful information about the effluent condition downstream from the location the treatment regimen is effected, it can even provide information on boiler operating load. For instance, if the nitrogen oxides level is relatively low, but the level of production of other pollutants is relatively high, then it can be assumed that the treatment regimen is operating on the left side of its curve plateau. Using this information, the effluent temperature can be determined with a reasonable degree of accuracy and, using the boiler characterization factor described above, the boiler load can be determined. Similarly, if the NOₓ reduction is near but not at its maximum level, and ammonia and carbon monoxide levels are all low, it can be assumed that the treatment regimen is operating on the right side slope, off the curve plateau, of its curve. Effluent temperature and boiler operating load can then be determined therefrom. The more intimate familiarity with the treatment regimen's curve, the more accurate the determinations can be.

It will be understood that there are significant temperature variations at any given boiler location, associated with effluent flow patterns, boiler firing conditions, wall effects, etc. A regimen effected at a boiler location and tailored to operate on the right side of its nitrogen oxides reduction versus effluent temperature curve when exposed to the median effluent temperature at such location will probably operate on the left side in a low temperature area within the location. The low temperature areas will result in production of ammonia and/or carbon monoxide, as apparent from a review of this disclosure. This effect can be minimized by minimizing treatment of the low temperature areas, such as by use of suitable injectors (familiar to the skilled artisan), by tailoring the treatment regimen to the low temperature areas, or by a multiple injection system utilizing both methods.

It will also be recognized by the skilled artisan that the process of the present invention can be combined with a NOₓ reducing process which utilizes selective catalytic reduction ("SCR") to reduce nitrogen oxides. Such an SCR process utilizes compounds of catalytic materials such as oxides or iron, vanadium and activated carbon to reduce the NOₓ content of effluents. In fact, the SCR treatment can be used as an additional stage in the process of this invention. To do so, the process disclosed herein is practiced to reduce the nitrogen oxides concentration in the effluent and also to adjust the ammonia remaining in the effluent to approximately a 1:1 ratio of ammonia to the nitrogen oxides remaining in the effluent by means achievable by the practice of the present invention, and then scrubbing the effluent with SCR to reduce the effluent NOₓ levels even further. In this way, the most advantageous aspects of both the non-catalytic, free radical reduction of nitrogen oxides disclosed herein and SCR can both be obtained, resulting in extremely high NOₓ reductions without significant amounts of other pollutants such as NH₃ or CO remaining in the effluent.

The following examples further illustrate and explain the invention by detailing the operation of a treatment regimen using "right side of the curve" methods.

### Example I

The burner used is a burner having an effluent flue conduit, known as a combustion tunnel, approximately 531 cm. (209 inches) in length and having an internal diameter of 20 cm. (8 inches) and walls 5 cm. (2 inches) thick. The burner has a flame area adjacent the effluent entry port and flue gas monitors adjacent the effluent exit port to measure the concentration of compositions such as nitrogen oxides, sulfur oxides, ammonia, carbon monoxide, carbon dioxide, percent excess oxygen and other compounds of interest which may be present in the effluent. The effluent flue conduit additionally has thermocouple ports for temperature measurement at various locations. The temperature of the effluent into which the treatment agents are injected is measured at the location of injection utilizing a K-type thermocouple. Atomizing injectors described in EP-A-300,028, which is post-published and therefore not revelent to the question of inventive step, are positioned through ports in the effluent flue conduit in order to introduce and distribute the treatment agents into the effluent stream. The agents are injected into the effluent at a rate of 300 ml/hr. The burner fuel is a Number 2 fuel oil, and the burner is fired at a rate of 4.35 kg/hr (9.6 lbs/hr) with an excess of oxygen of 3.0% by volume.

A baseline nitrogen oxides concentration reading is taken prior to beginning each run to calculate the injection ratio of treatment agent to baseline nitrogen oxides and the NSR, and a final nitrogen oxides reading is taken during and downstream from injection of the treatment agents to calculate the reduction in the nitrogen oxides concentration in the effluent elicited by each of the treatment agents injected. Moreover, an ammonia and carbon monoxide reading is taken during and downstream from injection of the treatment agents to calculate the production of other pollutants.

Aqueous solutions comprising 10% by weight of urea, 4% by weight of hexamethylenetetramine, 10% by weight of furfural and 0.1% by weight of a commercially available surfactant are injected into the effluent at the indicated temperatures. The results are set out in Table 1 and reproduced graphically in Figures 1 and 1a.

**Table 1**

| Temp. °C (°F.) | NOₓ (ppm) Baseline | NOₓ (ppm) Final | % Red. | NH₃ (ppm) | CO (ppm) |
|---|---|---|---|---|---|
| 760 (1400) | 177 | 96 | 45.8 | 48 | 275 |
| 832 (1530) | 180 | 78 | 56.7 | 38 | 110 |
| 882 (1620) | 185 | 80 | 56.8 | 18 | 20 |
| 916 (1680) | 190 | 80 | 57.9 | 8 | 15 |
| 943 (1730) | 195 | 100 | 48.7 | 10 | 8 |
| 982 (1800) | 202 | 113 | 44.1 | 6.5 | 5 |

### Example IIa

The procedure followed is that of Example I except that the boiler is fired at a rate of 4.35 kg/hr (9.6 lbs/hr) to 5.44 kg/hr (12.0 lbs/hr) to achieve the effluent temperatures.

The treatment agent injected is an aqueous solution which comprises 10% by weight of urea, 15% by weight of furfural, and 0.1% by weight of a commercially available surfactant. The injection temperature, % excess oxygen, NSR, baseline NOₓ, final NOₓ and % reduction of NOₓ for each run is set out in Table 2a and reproduced graphically in Figure 2.

**Table 2a**

| Run | Temp. °C (°F) | O₂% | NSR | NOₓ (ppm) | | % Red. |
|---|---|---|---|---|---|---|
| | | | | Baseline | Final | |
| 1 | 760 (1400) | 3.1 | 1.83 | 195 | 137 | 29.7 |
| 2 | 799 (1470) | 3.0 | 1.73 | 208 | 85 | 59.1 |
| 3 | 821 (1510) | 3.0 | 2.11 | 170 | 71 | 58.2 |
| 4 | 852 (1565) | 3.0 | 2.11 | 170 | 74 | 56.5 |
| 5 | 879 (1615) | 3.0 | 2.11 | 170 | 80 | 52.9 |
| 6 | 907 (1665) | 3.0 | 2.11 | 170 | 82 | 51.8 |
| 7 | 921 (1690) | 3.0 | 2.11 | 170 | 86 | 49.4 |
| 8 | 935 (1715) | 3.0 | 2.08 | 173 | 88 | 49.1 |
| 9 | 957 (1755) | 3.1 | 2.06 | 145 | 70 | 51.7 |
| 10 | 996 (1825) | 3.1 | 2.06 | 145 | 78 | 46.2 |
| 11 | 1024 (1875) | 3.0 | 2.07 | 145 | 110 | 24.1 |
| 12 | 1043 (1910) | 3.0 | 1.97 | 152 | 137 | 9.9 |
| 13 | 1060 (1940) | 3.0 | 1.97 | 152 | 203 | -33.6 |

### Example IIb

The procedure of Example IIa is repeated except that the treatment agent which is injected is an aqueous solution comprising 10% by weight of urea and 0.1% by weight of a commercially available surfactant. The results are set out in Table 2b and reproduced graphically in Figure 2.

**Table 2b**

| Run | Temp. °C (°F) | O₂% | NSR | NOₓ (ppm) | | % Red. |
|---|---|---|---|---|---|---|
| | | | | Baseline | Final | |
| 1 | 904 (1660) | 3.2 | 2.22 | 166 | 145 | 12.7 |
| 2 | 924 (1695) | 3.0 | 1.54 | 167 | 73 | 56.3 |
| 3 | 954 (1750) | 3.0 | 1.92 | 150 | 70 | 53.3 |
| 4 | 982 (1800) | 3.0 | 1.89 | 152 | 60 | 60.5 |
| 5 | 1010 (1850) | 3.0 | 1.85 | 155 | 68 | 56.1 |
| 6 | 1066 (1950) | 3.0 | 1.85 | 155 | 96 | 38.1 |
| 7 | 1082 (1980) | 3.0 | 1.81 | 159 | 107 | 32.7 |

### Example IIc

The procedure of Example IIa is repeated except that the treatment agent injected is an aqueous solution comprising 10% by weight off urea, 15% by weight of ethylene glycol and 0.1% by weight of a commercially available surfactant. The results are set out in Table 2c and reproduced graphically in Figure 2.

**Table 2c**

| Run | Temp. °C (°F) | O₂% | NSR | NOₓ (ppm) | | % Red. |
|---|---|---|---|---|---|---|
| | | | | Baseline | Final | |
| 1 | 788 (1450) | 7.0 | 1.69 | 145 | 125 | 13.8 |
| 2 | 824 (1515) | 3.1 | 1.76 | 178 | 98 | 44.9 |
| 3 | 846 (1555) | 3.2 | 1.79 | 174 | 62 | 64.4 |
| 4 | 899 (1650) | 3.0 | 1.91 | 165 | 70 | 57.6 |
| 5 | 932 (1710) | 3.0 | 1.53 | 167 | 85 | 49.1 |
| 6 | 938 (1720) | 3.0 | 1.45 | 167 | 112 | 32.9 |

### Example IIIa

The procedure of Example I is followed except that the boiler is fired at a rate of 4.35 kg/hr (9.6 lbs/hr) to 4.90 kg/hr (10.8 lbs/hr). The treatment agent injected comprises an aqueous solution of 10% by weight of urea, 5% by weight off ethylene glycol and 0.1% by weight of a commercially available surfactant. The results are set out in Table 3a and reproduced graphically in Figure 3a.

**Table 3a**

| Temp. °C (°F.) | NOₓ (ppm) Baseline | NOₓ (ppm) Final | % Red. | NH₃ (ppm) | CO (ppm) |
|---|---|---|---|---|---|
| 793 (1460) | 164 | 100 | 39.0 | 77 | 117 |
| 849 (1560) | 164 | 71 | 56.7 | 75 | 84 |
| 871 (1600) | 167 | 62 | 62.9 | 60 | 54 |
| 899 (1650) | 170 | 57 | 66.5 | 43 | 33 |
| 927 (1700) | 177 | 61 | 65.5 | 28 | 17 |
| 954 (1750) | 167 | 80 | 52.1 | 15 | 8 |
| 982 (1800) | 162 | 103 | 36.4 | 6 | 3 |
| 996 (1825) | 160 | 116 | 27.5 | 3 | 2 |

### Example IIIb

The procedure of Example IIIa is followed except that the treatment agent injected comprises an aqueous solution of 10% by weight of urea, 10% by weight of ethylene glycol and 0.1% by weight of a commercially available surfactant. The results are set out in Table 3b and reproduced graphically in Figure 3b.

**Table 3b**

| Temp. °C (°F.) | NOₓ (ppm) Baseline | NOₓ (ppm) Final | % Red. | NH₃ (ppm) | CO (ppm) |
|---|---|---|---|---|---|
| 760 (1400) | 193 | 138 | 28.5 | 95 | 265 |
| 796 (1465) | 193 | 117 | 39.4 | 87 | 245 |
| 849 (1560) | 193 | 73 | 62.2 | 57 | 76 |
| 871 (1600) | 195 | 67 | 65.6 | 38 | 33 |
| 899 (1650) | 197 | 75 | 61.9 | 20 | 17 |
| 927 (1700) | 198 | 87 | 56.1 | 23 | 14 |
| 960 (1760) | 177 | 112 | 36.7 | 7 | 5 |
| 982 (1800) | 177 | 130 | 26.6 | 3 | 3 |

### Example IIIc

The procedure of Example IIIb is followed except that the treatment agent injected comprises an aqueous solution of 10% by weight of urea, 15% by weight of ethylene glycol and 0.1% by weight of a commercially available surfactant. The results are set out in Table 3c and graphically reproduced in Figure 3c.

**Table 3c**

| Temp. °C (°F.) | NOₓ (ppm) Baseline | NOₓ (ppm) Final | % Red. | NH₃ (ppm) | CO (ppm) |
|---|---|---|---|---|---|
| 793 (1460) | 186 | 85 | 54.3 | 70 | 277 |
| 849 (1560) | 186 | 67 | 64.0 | 30 | 33 |
| 871 (1600) | 186 | 66 | 64.5 | 20 | 18 |
| 899 (1650) | 183 | 83 | 54.6 | 10 | 9 |
| 927 (1700) | 184 | 98 | 46.7 | 6 | 6 |
| 954 (1750) | 186 | 140 | 24.7 | 2 | 2 |

### Example IV

A treatment agent comprising an aqueous solution of 10% by weight of urea, 15% by weight of ethylene glycol and 0.1% by weight of a commercially available surfactant is injected into the effluent combustion tunnel described in Example I at a range of NSRs and the production of ammonia measured. The normalized stoichiometric ratio (NSR) for each injection and the results are set out in Table 4 and graphically reproduced in Figure 4. For convenience, the temperatures indicated in Figure 4 represent the approximate average of the temperatures of each data point for the respective curve.

**Table 4**

| Temp. °C (°F.) | NSR | NH₃ (ppm) |
|---|---|---|
| 849 (1560) | .61 | 8 |
| 846 (1555) | .90 | 19 |
| 843 (1550) | 1.20 | 33 |
| 882 (1620) | .87 | 5 |
| 882 (1620) | .99 | 12 |
| 888 (1630) | 1.46 | 12 |
| 885 (1625) | 1.95 | 24 |
| 935 (1715) | 1.41 | 3 |
| 938 (1720) | 2.01 | 8 |
| 943 (1730) | 2.87 | 7 |
| 971 (1780) | 3.52 | 6 |
| 968 (1775) | 5.47 | 14 |

## Claims

1. A process for reducing the concentration of nitrogen oxides in an effluent from the combustion of a carbonaceous fuel while minimizing the production of other pollutants, the process comprising:
(a) effecting an initial treatment regimen which comprises introducing a chemical treatment agent having a nitrogen oxides reduction versus effluent temperature curve and curve plateau and comprising urea, ammonia, hexamethylene-tetramine, a paraffinic hydrocarbon, an olefinic hydrocarbon, an aromatic hydrocarbon, an oxygenated hydrocarbon, an ammonium salt of an organic acid having a carbon to nitrogen ratio of greater than 1:1, a hydroxy amino hydrocarbon, a heterocyclic hydrocarbon having at least one cyclic oxygen, a five- or six-membered heterocyclic hydrocarbon having at least one cyclic nitrogen, hydrogen peroxide, guanidine, guanidine carbonate, biguanidine, guanylurea sulphate, melamine, dicyandiamide, calcium cyanamide, biuret, 1,1'-azobisformamide, methylol urea, methylol urea-urea condensation product, dimethylol urea, methyl urea, dimethyl urea or mixtures thereof into the effluent to reduce the nitrogen oxides concentration therein by a reaction or a series of reactions facilitated by said treatment agent;
(b) monitoring the condition of the effluent until an alteration in the condition of the effluent is observed;
(c) adjusting said initial treatment regimen in response to alteration in the condition of the effluent by varying at least one of the following parameters:
i. dilution of said treatment agent;
ii. introduction rate of said treatment agent;
iii. components of said treatment agent;
iv. relative presence of treatment agent components;
v. position at which introduction of said treatment agent occurs; and
vi. normalized stoichiometric ratio,
to effect an adjusted treatment regimen, wherein said adjusted treatment regimen comprises introducing a chemical treatment agent having a nitrogen oxides reduction versus effluent temperature curve, wherein operation of said adjusted treatment regimen at the altered effluent condition is further towards the right side of its nitrogen oxides reduction versus effluent temperature curve plateau than that of said initial treatment regimen to reduce the nitrogen oxides concentration in the effluent under said altered effluent condition while minimizing the production of other pollutants or to drive said reaction or series of reactions towards a reduction of the production of other pollutants while substantially maintaining the level of nitrogen oxides reduction.

2. A process according to claim 1 wherein determining the initial treatment regimen in step (a) and/or adjusting said initial treatment regimen in step (c) are effected by effecting a plurality of treatment regimens, comprising
(a) determining by measurement or calculation the nitrogen oxides reduction versus effluent temperature curve for each of a plurality of treatment regimens;
(b) ascertaining by comparison which treatment regimen which, when effected to treat an effluent at the effluent temperature existing at a location for injection, acts within its curve plateau at the point furthest to the right; and
(c) effecting said ascertained treatment regimen to reduce the nitrogen oxides concentration of the effluent while substantially avoiding the production of other pollutants.

3. A process according to claim 1 wherein determining the initial treatment regimen in step (a) and/or adjusting said initial treatment regimen in step (c) comprise(s):
(a) effecting a first treatment regimen which comprises introducing said treatment agent into the effluent to treat the effluent to reduce the nitrogen oxides concentration in the effluent through a reaction or series of reactions facilitated by said first treatment regimen;
(b) determining the position on the nitrogen oxides reduction versus effluent temperature curve for said treatment agent at which said first treatment regimen is being effected;
(c) adjusting said first treatment regimen by varying at least one of the following parameters:
i. dilution of said treatment agent;
ii. introduction rate of said treatment agent;
iii. components of said treatment agent;
iv. relative presence of treatment agent components; and
v. normalized stoichiometric ratio
to effect a second treatment regimen; and
(d) determining the location on the nitrogen oxides reduction versus effluent temperature curve for said second treatment regimen at which said second treatment regimen is being effected,
wherein the location at which said second treatment regimen is being effected is further towards the right side of its nitrogen oxides reduction versus effluent temperature curve plateau than the location at which said first treatment regimen is being effected on its nitrogen oxides reduction versus effluent temperature curve at the altered effluent condition.

4. The process of any one of claims 1 to 3, wherein the monitored condition of the effluent is selected from boiler operating load, effluent temperature at a location for the introduction of a treatment agent, effluent carbon monoxide level, effluent excess oxygen level, and combinations thereof.

5. The process of any one of claims 1 to 4, which further comprises increasing the introduction rate of said treatment agent to increase the normalized stoichiometric ratio until a predetermined maximum level of other pollutants is substantially attained but not surpassed.

6. The process of any one of claims 1 to 5, which further comprises increasing the introduction rate of said treatment agent to increase the normalized stoichiometric ratio until a predetermined target level of nitrogen oxides reductions is obtained, provided that a predetermined maximum level of other pollutants is not surpassed.

7. The process of any one of claims 1 to 6, wherein said hydrocarbon is selected from nitrogenated hydrocarbons, oxygenated hydrocarbons, hydroxy amino hydrocarbons, heterocyclic hydrocarbons, or mixtures thereof.

8. The process of any one of claims 1 to 7, wherein said treatment agent further comprises an enhancer selected from furfural, sugar, milk, glycine, ethylene glycol, hexamethylene-tetramine, and mixtures thereof.

## Patentansprüche

1. Verfahren zur Verringerung der Konzentration von Stickoxiden im Abgas aus der Verbrennung eines kohlenstoffhaltigen Brennstoffs, während die Erzeugung anderer Schadstoffe minimiert wird, wobei das Verfahren umfaßt:
(a) Schaffen von Betriebsbedingungen für eine Anfangsbehandlung, umfassend Einführen eines chemischen Behandlungsmittels, das eine Kurve und ein Kurvenplateau, entstanden durch Auftragen der Stickoxidabnahme gegen die Abgastemperatur, aufweist und Harnstoff, Ammoniak, Hexamethylentetramin, einen paraffinischen Kohlenwasserstoff, einen olefinischen Kohlenwasserstoff, einen aromatischen Kohlenwasserstoff, einen sauerstoffhaltigen Kohlenwasserstoff, ein Ammoniumsalz einer organischen Säure mit einem Kohlenstoff/Stickstoff-Verhältnis von größer als 1:1, einen Hydroxyaminokohlenwasserstoff, einen heterocyclischen Kohlenwasserstoff mit mindestens einem Sauerstoffatom im Ring, einen fünf- oder sechsgliedrigen heterocyclischen Kohlenwasserstoff mit mindestens einem Stickstoffatom im Ring, Wasserstoffperoxid, Guanidin, Guanidincarbonat, Biguanidin, Guanylharnstoffsulfat, Melamin, Dicyandiamid, Calciumcyanamid, Biuret, 1,1'-Azobisformamid, Methylolharnstoff, Methylolharnstoff-Harnstoff-Kondensationsprodukt, Dimethylolharnstoff, Methylharnstoff, Dimethylharnstoff oder Gemische davon umfaßt, in das Abgas, um die Stickoxidkonzentration darin durch eine Umsetzung oder eine Reihe von Umsetzungen, die durch das Behandlungsmittel erleichtert werden, zu verringern;
(b) die Überwachung der Beschaffenheit des Abgases, bis eine Änderung in der Beschaffenheit des Abgases beobachtet wird;
(c) Einstellen der Betriebsbedingungen der Anfangsbehandlung als Antwort auf eine Änderung in der Beschaffenheit des Abgases durch Verändern von mindestens einem der folgenden Parameter:
i. Verdünnung des Behandlungsmittels;
ii. Zufuhrgeschwindigkeit des Behandlungsmittels;
iii. Bestandteile des Behandlungsmittels;
iv. vorliegendes Verhältnis der Bestandteile des Behandlungsmittels;
v. der Ort, an dem die Einführung des Behandlungsmittels erfolgt und
vi. normalisiertes stöchiometrisches Verhältnis,
zur Schaffung eingestellter Betriebsbedingungen zur Behandlung, wobei die eingestellten Betriebsbedingungen zur Behandlung das Einführen eines chemischen Behandlungsmittels umfassen, das eine Kurve aufweist, entstanden durch Auftragen der Stickoxidabnahme gegen die Abgastemperatur, wobei der Betrieb unter eingestellten Betriebsbedingungen bei veränderter Abgasbeschaffenheit weiter auf der rechten Seite des Plateaus ihrer Kurve, entstanden durch Auftragen der Stickoxidabnahme gegen die Abgastemperatur, als der der Betriebsbedingungen der Anfangsbehandlung liegt, um die Stickoxidkonzentration im Abgas bei der veränderten Abgasbeschaffenheit zu verringern, während die Erzeugung anderer Schadstoffe minimiert wird, oder um die Umsetzung oder die Reihe von Umsetzungen in Richtung einer Verringerung der Erzeugung anderer Schadstoffe zu lenken, während das Niveau der Verringerung von Stickoxiden im wesentlichen aufrechterhalten wird.

2. Verfahren nach Anspruch 1, wobei die Festlegung der Betriebsbedingungen für die Anfangsbehandlung in Schritt (a) und/oder das Einstellen der Betriebsbedingungen für die Anfangsbehandlung in Schritt (c) durch Schaffen verschiedener Betriebsbedingungen für die Behandlung bewirkt werden, umfassend
(a) die Bestimmung der Kurve, die durch Auftragen der Stickoxidabnahme gegen die Abgastemperatur entsteht, für jede der verschiedenen Betriebsbedingungen für die Behandlung durch Messung oder Berechnung;
(b) die vergleichende Ermittlung, welche Betriebsbedingungen für die Behandlung, wenn sie zur Abgasbehandlung bei der Abgastemperatur, die am Ort der Einspritzung vorliegt, hergestellt werden, innerhalb ihres Kurvenplateaus am Punkt, der am weitesten rechts liegt, wirken; und
(c) Schaffen der ermittelten Betriebsbedingungen für die Behandlung, um die Stickoxidkonzentration des Abgases zu verringern, während die Erzeugung anderer Schadstoffe im wesentlichen vermieden wird.

3. Verfahren nach Anspruch 1, wobei die Bestimmung der Betriebsbedingungen für die Anfangsbehandlung in Schritt (a) und/oder für die Einstellung der Betriebsbedingungen für die Anfangsbehandlung in Schritt (c) umfaßt/umfassen
(a) Schaffen von Betriebsbedingungen für eine erste Behandlung, die das Einführen des Behandlungsmittels in das Abgas zur Abgasbehandlung umfassen, um die Stickoxidkonzentration im Abgas durch eine Umsetzung oder Reihe von Umsetzungen zu verringern, die durch die Betriebsbedingungen für die erste Behandlung erleichtert werden;
(b) die Bestimmung des Ortes auf der Kurve, die durch Auftragen der Stickoxidabnahme gegen die Abgastemperatur entsteht, für das Behandlungsmittel, bei dem die Betriebsbedingungen für die erste Behandlung geschaffen werden;
(c) Einstellen der Betriebsbedingungen für die erste Behandlung durch Verändern von mindestens einem der folgenden Parameter:
i. Verdünnung des Behandlungsmittels;
ii. Zufuhrgeschwindigkeit des Behandlungsmittels;
iii. Bestandteile des Behandlungsmittels;
iv. vorliegendes Verhältnis der Bestandteile des Behandlungsmittels und
v. normalisiertes stöchiometrisches Verhältnis,
um Betriebsbedingungen für eine zweite Behandlung zu schaffen; und
(d) die Bestimmung des Ortes auf der Kurve, die durch Auftragen der Stickoxidabnahme gegen die Abgastemperatur entsteht, für die Betriebsbedingungen der zweiten Behandlung, bei dem Betriebsbedingungen für die zweite Behandlung geschaffen werden,
wobei der Ort, bei dem Betriebsbedingungen für die zweite Behandlung geschaffen werden, weiter auf der rechten Seite des Plateaus ihrer Kurve, die durch Auftragen der Verringerung von Stickoxiden gegen die Abgastemperatur entsteht, liegt als der Ort, bei dem Betriebsbedingungen für die erste Behandlung auf ihrer Kurve, die durch Auftragen der Verringerung der Stickoxide gegen die Abgastemperatur bei der veränderten Abgasbeschaffenheit entsteht, geschaffen werden.

4. Verfahren nach einem der Ansprüche 1 bis 3, wobei die überwachte Beschaffenheit des Abgases aus der Betriebsbeanspruchung der Feuerungsanlage, der Abgastemperatur an einem Ort für das Einführen eines Behandlungsmittels, dem Kohlenmonoxidgehalt des Abgases, dem überschüssigen Sauerstoffgehalt des Abgases und Kombinationen davon ausgewählt wird.

5. Verfahren nach einem der Ansprüche 1 bis 4, das ferner die Erhöhung der Zufuhrgeschwindigkeit des Behandlungsmittels umfaßt, um das normalisierte stöchiometrische Verhältnis zu erhöhen, bis ein vorher festgelegter Maximalgehalt anderer Schadstoffe im wesentlichen erreicht, aber nicht überschritten wird.

6. Verfahren nach einem der Ansprüche 1 bis 5, das ferner eine Erhöhung der Zufuhrgeschwindigkeit des Behandlungsmittels umfaßt, um das normalisierte stöchiometrische Verhältnis zu erhöhen, bis ein vorher festgelegter Zielanteil an Stickoxidverringerungen erhalten wird, mit der Maßgabe, daß ein vorher festgelegter Maximalgehalt an anderen Schadstoffen nicht überschritten wird.

7. Verfahren nach einem der Ansprüche 1 bis 6, wobei der Kohlenwasserstoff aus stickstoffhaltigen Kohlenwasserstoffen, sauerstoffhaltigen Kohlenwasserstoffen, Hydroxyaminokohlenwasserstoffen, heterocyclischen Kohlenwasserstoffen oder Gemischen davon ausgewählt wird.

8. Verfahren nach einem der Ansprüche 1 bis 7, wobei das Behandlungsmittel ferner einen Verstärker umfaßt, der aus Furfural, Zucker, Milch, Glycin, Ethylenglykol, Hexamethylentetramin und Gemischen davon ausgewählt wird.

## Revendications

1. Procédé de réduction de la concentration d'oxydes d'azote dans un effluent provenant de la combustion d'un combustible carboné tout en minimisant la production d'autres polluants, le procédé comprenant :
(a) la réalisation d'un régime de traitement initial qui comprend l'introduction d'un agent de traitement chimique ayant une courbe et un plateau de courbe de réduction des oxydes d'azote par rapport à la température de l'effluent et comprenant de l'urée, de l'ammoniac, de l'hexaméthylènetétramine, un hydrocarbure paraffinique, un hydrocarbure oléfinique, un hydrocarbure aromatique, un hydrocarbure oxygéné, un sel d'ammonium d'un acide organique ayant un rapport carbone/azote supérieur à 1/1, un hydroxy amino hydrocarbure, un hydrocarbure hétérocyclique comportant au moins un oxygène cyclique, un hydrocarbure hétérocyclique pentagonal ou hexagonal comportant au moins un azote cyclique, du peroxyde d'hydrogène, de la guanidine, du carbonate de guanidine, de la biguanidine, du sulfate de guanylurée, de la mélamine, du dicyandiamide, du cyanamide de calcium, du biuret, du 1,1'-azobisformamide, de la méthylol urée, un produit de condensation de méthylol urée-urée, de la diméthylol urée, de la méthyl urée, de la diméthyl urée ou leurs mélanges dans l'effluent pour y réduire la concentration en oxydes d'azote par une réaction ou une série de réactions facilitées par l'agent de traitement susdit;
(b) le contrôle de l'état de l'effluent jusqu'à ce qu'une modification de l'état de l'effluent soit observée;
(c) l'ajustement du régime de traitement initial en réponse à la modification de l'état de l'effluent en faisant varier au moins l'un des paramètres suivants :
i. la dilution de l'agent de traitement;
ii. la vitesse d'introduction de l'agent de traitement;
iii. les composants de l'agent de traitement;
iv. la présence relative des composants de l'agent de traitement;
v. la position à laquelle l'introduction de l'agent de traitement se fait; et
vi. le rapport stoechiométrique normalisé,
pour effectuer un régime de traitement ajusté, dans lequel le régime de traitement ajusté comprend l'introduction d'un agent de traitement chimique ayant une courbe de réduction des oxydes d'azote par rapport à la température de l'effluent, dans lequel l'opération du régime de traitement ajusté à l'état de l'effluent modifié est effectuée plus vers le côté droit de son plateau de courbe de réduction des oxydes d'azote par rapport à la température de l'effluent que celui du régime de traitement initial précité pour réduire la concentration des oxydes d'azote dans l'effluent sous l'état de l'effluent modifié susdit tout en minimisant la production d'autres polluants ou pour entraîner la réaction ou la série de réactions précitées vers une réduction de la production des autres polluants tout en maintenant sensiblement le niveau de réduction des oxydes d'azote.

2. Procédé suivant la revendication 1, dans lequel la détermination du régime de traitement initial dans l'étape (a) et/ou l'ajustement du régime de traitement initial dans l'étape (c) sont effectués en réalisant une pluralité de régimes de traitement, comprenant :
(a) la détermination par une mesure ou un calcul de la courbe de réduction des oxydes d'azote par rapport à la température de l'effluent pour chacun d'une pluralité de régimes de traitement;
(b) la détermination par comparaison du régime de traitement qui, lorsqu'il est effectué pour traiter un effluent à la température d'effluent existante en un lieu pour l'injection, agit dans les limites de son plateau de courbe au point le plus éloigné vers la droite; et
(c) la réalisation du régime de traitement déterminé susdit pour réduire la concentration des oxydes d'azote de l'effluent tout en évitant sensiblement la production d'autres polluants.

3. Procédé suivant la revendication 1, dans lequel la détermination du régime de traitement initial dans l'étape (a) et/ou l'ajustement du régime de traitement initial susdit dans l'étape (c) comprend :
(a) la réalisation d'un premier régime de traitement qui comprend l'introduction de l'agent de traitement dans l'effluent pour traiter l'effluent de manière à réduire la concentration des oxydes d'azote dans l'effluent par une réaction ou une série de réactions facilitées par le premier régime de traitement;
(b) la détermination de la position sur la courbe de la réduction des oxydes d'azote par rapport à la température de l'effluent pour l'agent de traitement susdit à laquelle le premier régime de traitement est effectué;
(c) l'ajustement du premier régime de traitement en faisant varier au moins l'un des paramètres suivants :
i. la dilution de l'agent de traitement;
ii. la vitesse d'introduction de l'agent de traitement;
iii. les composants de l'agent de traitement;
iv. la présence relative des composants de l'agent de traitement; et
v. le rapport stoechiométrique normalisé,
pour effectuer un second régime de traitement; et
(d) la détermination de l'emplacement sur la courbe de réduction des oxydes d'azote par rapport à la température de l'effluent pour le second régime de traitement, auquel ce second régime de traitement est effectué,
dans lequel l'emplacement auquel le second régime de traitement est effectué est situé plus vers le côté droit de son plateau de courbe de réduction des oxydes d'azote par rapport à la température de l'effluent que l'emplacement auquel le premier régime de traitement est effectué sur sa courbe de réduction des oxydes d'azote par rapport à la température de l'effluent à l'état de l'effluent modifié.

4. Procédé suivant l'une quelconque des revendications 1 à 3, dans lequel l'état contrôlé de l'effluent est choisi parmi la charge de fonctionnement d'une chaudière, la température de l'effluent en un emplacement pour l'introduction d'un agent de traitement, le niveau de monoxyde de carbone de l'effluent, le niveau d'oxygène excédentaire de l'effluent et leurs combinaisons.

5. Procédé suivant l'une quelconque des revendications 1 à 4, qui comprend de plus une augmentation de la vitesse d'introduction de l'agent de traitement pour augmenter le rapport stoechiométrique normalisé jusqu'à ce qu'un niveau maximum prédéterminé des autres polluants soit pratiquement atteint mais non dépassé.

6. Procédé suivant l'une quelconque des revendications 1 à 5, qui comprend de plus une augmentation de la vitesse d'introduction de l'agent de traitement pour augmenter le rapport stoechiométrique normalisé jusqu'à ce qu'un niveau visé prédéterminé des réductions d'oxydes d'azote soit obtenu, pour autant qu'un niveau maximum prédéterminé des autres polluants ne soit pas dépassé.

7. Procédé suivant l'une quelconque des revendications 1 à 6, dans lequel l'hydrocarbure est choisi parmi les hydrocarbures azotés, les hydrocarbures oxygénés, les hydroxy amino hydrocarbures, les hydrocarbures hétérocycliques et leurs mélanges.

8. Procédé suivant l'une quelconque des revendications 1 à 7, dans lequel l'agent de traitement comprend de plus un activateur choisi parmi le furfural, le sucre, le lait, la glycine, l'éthylène glycol, l'hexaméthylènetétramine et leurs mélanges.
